# EUROPÄISCHE PATENTANMELDUNG

(11) **EP 4 636 718 A1**
(43) Veröffentlichungstag der Anmeldung: **22.10.2025**
(21) Anmeldenummer: 24170140.8
(22) Anmeldetag: 15.04.2024
(51) Int. Cl.: G07C 5/08, G01P 1/12

(54) **VERFAHREN FÜR EIN KONTROLLGERÄT ZUM BEWERTEN VON EINER BEWEGUNG EINES FAHRZEUGS, INSBESONDERE NUTZFAHRZEUGS, COMPUTERPROGRAMM UND/ODER COMPUTERLESBARES MEDIUM, DATENVERARBEITUNGSVORRICHTUNG, KONTROLLGERÄT UND FAHRZEUG**

(71) Anmelder: ZF CV Systems Global GmbH, 3006 Bern (CH)
(72) Erfinder: KRUSE, Martin, 13509 Berlin (DE)
(74) Vertreter: Schäferjohann, Volker

(57) **Zusammenfassung**

Verfahren (300) für ein Kontrollgerät (210) zum Bewerten von einer Bewegung eines Fahrzeugs (200a), insbesondere Nutzfahrzeugs (200b), wobei das Fahrzeug (200a), insbesondere Nutzfahrzeug (200b), das als Tachograf (211) ausgebildete Kontrollgerät (210) mit einem Beschleunigungssensor (260) zum Erfassen von Beschleunigungswerten (265, 275) aufweist, und das Verfahren (300) aufweist: Erfassen (310) von Beschleunigungswerten (265) in einem Mess-Modus (MM), wobei die Beschleunigungswerte (265) in dem Mess-Modus (MM) mit einer Mess-Frequenz (FM) erfasst werden; Bestimmen (320) einer Bewertungsgröße (295), wobei die Bewertungsgröße (295) abhängig von einer die Beschleunigungswerte (265) betreffenden Beschleunigungs-Schwellwertbedingung (266) und einer eine Häufigkeit (270) eines Erfüllens der Beschleunigungs-Schwellwertbedingung (266) betreffenden Häufigkeits-Schwellwertbedingung (271) ist; und Ausgeben (330) der Bewertungsgröße (295).

## Beschreibung

Die vorliegende Offenbarung betrifft ein Verfahren für ein Kontrollgerät zum Bewerten von einer Bewegung eines Fahrzeugs, insbesondere Nutzfahrzeugs, wobei das Fahrzeug, insbesondere Nutzfahrzeug, das als Tachograf ausgebildete Kontrollgerät mit einem Beschleunigungssensor zum Erfassen von Beschleunigungswerten aufweist. Die Offenbarung betrifft gleichermaßen ein Computerprogramm und/oder computerlesbares Medium, eine Datenverarbeitungsvorrichtung für ein als Tachograf ausgebildetes und einen Beschleunigungssensor umfassendes Kontrollgerät für ein Fahrzeug, insbesondere Nutzfahrzeug, ein Kontrollgerät für ein Fahrzeug, insbesondere Nutzfahrzeug, wobei das Kontrollgerät als Tachograf ausgebildet ist und einen Beschleunigungssensor und eine Datenverarbeitungsvorrichtung umfasst, und ein Fahrzeug, insbesondere Nutzfahrzeug, umfassend ein Kontrollgerät.

Ein derartiges Kontrollgerät ist aus dem Stand der Technik bekannt. Das Kontrollgerät kann auch als Fahrtenschreiber bezeichnet werden und ist ein typischerweise für den Einbau in das Fahrzeug, insbesondere Nutzfahrzeug, bestimmtes Gerät zum vollautomatischen oder halbautomatischen Anzeigen, Aufzeichnen, Ausdrucken, Speichern und Ausgeben von Angaben über die Fahrten des Fahrzeugs, einschließlich seiner Fahrgeschwindigkeit sowie von Angaben über bestimmte Tätigkeitszeiten der Fahrer. Das Fahrzeug, insbesondere Nutzfahrzeug, wird im Folgenden als Fahrzeug bezeichnet. Mit anderen Worten ist ein Tachograf eine Vorrichtung, die in einem Fahrzeug verwendet wird, um beispielsweise Daten über die Fahrzeugbewegungen beziehungsweise Lenkzeiten zu erfassen, aufzuzeichnen und/oder auszuwerten. Das Kontrollgerät wird in erster Linie in kommerziellen Fahrzeugen, insbesondere Nutzfahrzeugen, wie Lastkraftwagen und Bussen eingesetzt. Ein Zweck des Tachografen besteht darin, die Einhaltung der Lenk- und Ruhezeiten sowie der Arbeitszeitvorschriften für Fahrer sicherzustellen. Das Fahrzeug, insbesondere Nutzfahrzeug, wird im Folgenden als Fahrzeug bezeichnet.

Das Kontrollgerät dient auch dazu, Vorschriften im Straßenverkehr zu kontrollieren und sicherzustellen, wobei die Vorschriften relevant für die Sicherheit im Straßenverkehr sowie beispielsweise innerhalb der Europäischen Union für faire Wettbewerbsbedingungen im Transportsektor sein können. Das Kontrollgerät soll es ermöglichen, die Angaben über die Fahrten des Fahrzeugs, zu überwachen beziehungsweise zu kontrollieren.

Das Kontrollgerät umfasst typischerweise eine sogenannte Fahrzeugeinheit, die die Funktion des Kontrollgeräts bestimmt. Ein derartiges Kontrollgerät ist beispielsweise in Verordnung (EU) Nr. 165/2014 des europäischen Parlaments und des Rates vom 4. Februar 2014 beschrieben.

DE 10 2013 100 929 A1 offenbart einen digitalen Tachographen für ein Fahrzeug zur Erfassung von fahrzeugrelevanten und/oder fahrerrelevanten Informationen.

Zudem ist es bekannt, Fahrdynamikdaten des Fahrzeugs zu erfassen. Beispielsweise ist es bekannt, einen Beschleunigungssensor in einem Fahrzeug zu verwenden, siehe Fang S, Wang Z, Zhao L., "Research on the automotive sensoraided low-cost inertial navigation system for land vehicles", Advances in Mechanical Engineering. 2019;11(1). doi:10.1177/1687814018822876.

Es ist auch bekannt, Fahrzeuge zu verfolgen beziehungsweise zu "tracken".

EP 2 752 642 A1 offenbart Straßenverkehrssicherheitssysteme. Ein Mikroprozessor übermittelt Navigationsinformationen über den Standort eines Fahrzeugs über den Ein-/Ausgabeport einer Standard-UART-Schnittstelle an ein GSM/GPRS-Modem, das mit Hilfe von einem Tracking-Fahrtenschreiber im GSM-Netz authentifiziert eine SIM-Karte und die gewonnenen Informationen dann an eine Zentrale übermittelt. Informationen von einem Satellitennavigationsempfänger werden über ein Standard-NMEA-Protokoll an den Mikroprozessor gesendet, wo sie umgewandelt werden und anschließend an die Navigationskomponente mit Informationen über Bodengeschwindigkeit, Breiten- und Längengrad übertragen werden das Kontrollzentrum. Gleichzeitig wird die Zeit des Tracking-Tachographen mit der UTC-Zeit synchronisiert, die im Satellitennavigationssystem verwendet wird. Der Mikroprozessor empfängt außerdem Informationen von einem Beschleunigungsmesser, die die Informationen des Satellitennavigationsempfängers ergänzen. Das technische Ergebnis ist eine Erhöhung der Betriebsgenauigkeit des Tracking-Fahrtenschreibers durch Synchronisierung mit der UTC-Zeit, die im Satellitennavigationssystem verwendet wird und eine Verringerung der Arbeitsintensität bei der Installation und Kalibrierung des Tracking-Fahrtenschreibers ohne zusätzliche Kosten.

Um die Manipulationssicherheit der durch das Kontrollgerät erfassten Daten zu erhöhen und/oder Manipulationen erkennen zu können, können verschiedene Daten miteinander verglichen werden, um diese auf Plausibilität beziehungsweise Konsistenz prüfen zu können und/oder einen sogenannten Datenkonflikt zu identifizieren. Dabei kann jedoch jede Schnittstelle zu dem Kontrollgerät beziehungsweise der Fahrzeugeinheit ein potenzielles Risiko für Manipulationen darstellen. Daher kann es nützlich sein, auf eine derartige Schnittstelle zu verzichten.

Beispielsweise normiert die Durchführungsverordnung (EU) 2021/1228 der Kommission vom 16. Juli 2021 zur Änderung der Durchführungsverordnung (EU) 2016/799 zur Festlegung der Vorschriften über Bauart, Prüfung, Einbau, Betrieb und Reparatur von intelligenten Fahrtenschreibern und ihren Komponenten, dass zur Ermittlung einer etwaigen Manipulation der Bewegungsdaten die vom Bewegungssensor stammenden Informationen durch Daten zur Fahrzeugbewegung zu untermauern sind, die aus dem GNSS-Empfänger oder anderen vom Bewegungssensor unabhängigen Quellen gewonnen werden. Mindestens eine weitere unabhängige Fahrzeugbewegungsquelle muss sich innerhalb der Fahrzeugeinheit befinden, ohne dass eine externe Schnittstelle benötigt wird. Ein Ereignis ,Datenkonflikt Fahrzeugbewegung' muss gemäß der Durchführungsverordnung bei Eintritt von einer der Auslösebedingungen ausgelöst werden, bei der die Fahrzeugeinheit eine Abweichung feststellt, die darin besteht, dass in einem bestimmten Zeitraum der Bewegungssensor keine Bewegung erkennt und die unabhängige Bewegungsquelle eine Bewegung erkennt. Die Bedingungen für die Aufzeichnung einer Abweichung sowie des Zeitraums der Feststellung der Abweichung werden vom Hersteller der Fahrzeugeinheit festgelegt.

Vor dem Hintergrund dieses Standes der Technik besteht eine Aufgabe der vorliegenden Offenbarung darin, ein Verfahren und insbesondere ein Kontrollgerät anzugeben, welche jeweils geeignet sind, den Stand der Technik zu bereichern und zumindest die oben genannten Aspekte des Standes der Technik zu verbessern. Insbesondere ist es die Aufgabe der Offenbarung, zuverlässig eine Bewegung eines Fahrzeugs bewerten zu können.

Gelöst wird die Aufgabe durch die Merkmale der unabhängigen Ansprüche. Die Unteransprüche haben Weiterbildungen der Offenbarung zum Inhalt.

Danach wird die Aufgabe gemäß einem Aspekt der Offenbarung durch ein Verfahren für ein Kontrollgerät zum Bewerten von einer Bewegung eines Fahrzeugs, insbesondere Nutzfahrzeugs, gelöst, wobei das Fahrzeug, insbesondere Nutzfahrzeug, das als Tachograf ausgebildete Kontrollgerät mit einem Beschleunigungssensor zum Erfassen von Beschleunigungswerten aufweist, und das Verfahren aufweist: Erfassen von Beschleunigungswerten in einem Mess-Modus, wobei die Beschleunigungswerte in dem Mess-Modus mit einer Mess-Frequenz erfasst werden; Bestimmen einer Bewertungsgröße, wobei die Bewertungsgröße abhängig von einer die Beschleunigungswerte betreffenden Beschleunigungs-Schwellwertbedingung und einer eine Häufigkeit eines Erfüllens der Beschleunigungs-Schwellwertbedingung betreffenden Häufigkeits-Schwellwertbedingung ist; und Ausgeben der Bewertungsgröße.

Es wurde erkannt, dass es möglich ist, den Beschleunigungssensor des Kontrollgeräts als eine unabhängige "Bewegungsquelle" zu verwenden, um eine Bewegung zu erkennen und zu bewerten. Die Verwendung des Beschleunigungssensors des Kontrollgeräts macht eine externe Schnittstelle entbehrlich. Dabei kann der Beschleunigungssensor zum Erkennen und Bewerten der Bewegung verwendet werden, zusätzlich oder anstelle von einer möglichen Trackingfunktion des Beschleunigungssensors.

Es wurde ferner erkannt, dass Bewegungen des Fahrzeugs verschieden ausgeprägt sein können, wobei beispielsweise ein Fahren des Fahrzeugs zu einer von einer durch beispielsweise einen Windstoß sehr verschiedenen Bewegung des Fahrzeugs führen kann. Daher wird vorgeschlagen, dass durch den Beschleunigungssensor die Beschleunigungswerte erfasst werden und zwei Schwellwertbedingungen angewendet werden, nämlich die Beschleunigungs-Schwellwertbedingung, die beispielsweise den Betrag eines gemessenen Beschleunigungswerts zum Gegenstand hat, und die Häufigkeits-Schwellwertbedingung, die die Häufigkeit des Erfüllens der Beschleunigungs-Schwellwertbedingung zum Gegenstand hat. Mit anderen Worten bringt die Häufigkeits-Schwellwertbedingung eine zeitliche Komponente in die Bewertung der Bewegung ein. Durch die Verwendung der zwei Schwellwertbedingungen ist ein zuverlässiges und genaues Bewerten der Bewegung des Fahrzeugs möglich.

Optional weist das Verfahren auf: Erfassen eines Test-Beschleunigungswerts in einem Test-Modus, wobei in dem Test-Modus Test-Beschleunigungswerte mit einer von der Mess-Frequenz verschiedenen Test-Frequenz erfasst werden; und Bestimmen einer Modusänderung zum Wechseln von dem Test-Modus in den Mess-Modus anhand einer den Test-Beschleunigungswert betreffenden Test-Beschleunigungs-Schwellwertbedingung. Dabei wurde erkannt, dass es möglich ist, das Verfahren hinsichtlich der Auswertung der Beschleunigungswerte in wenigstens den Test-Modus und den Mess-Modus zu gliedern. Somit kann der Energieverbrauch des Kontrollgeräts günstig beeinflusst werden. Der Test-Modus kann als der Normalmodus aufgefasst werden, wenn das Fahrzeug abgestellt ist und keine Bewegung erfasst wurde.

Optional ist die Mess-Frequenz größer als die Test-Frequenz. Damit kann der Test-Modus stromsparender als der Mess-Modus sein. Dabei werden in dem Test-Modus weniger Beschleunigungswerte erfasst und es sind entsprechend weniger Daten auszuwerten als in dem Mess-Modus.

Optional wird in dem Test-Modus ein Kalibrationssignal zum Kalibrieren des Beschleunigungssensor ausgegeben. Durch das Kalibrieren kann beispielsweise die Gewichtskraft beziehungsweise Erdbeschleunigung berücksichtigt werden. Die Orientierung des Kontrollgeräts kann nach dem Kalibrieren somit beliebig sein.

Optional wird in Abhängigkeit von der die Häufigkeit betreffenden Häufigkeits-Schwellwertbedingung ein Kalibrationssignal zum Kalibrieren des Beschleunigungssensor und/oder ein Ruhesignal zum Aktiveren eines Ruhe-Modus des Beschleunigungssensors ausgegeben. Ist beispielsweise die Häufigkeit niedriger als ein durch die Häufigkeits-Schwellwertbedingung definierter Wert, kann in den Ruhe-Modus gewechselt werden, in dem der Beschleunigungssensor im Wesentlich deaktiviert sein kann und/oder Messungen ignoriert werden können. Der Ruhe-Modus ermöglicht somit eine Art Übergangszeitraum, in denen keine Bewegung erfasst wird, um Energie zu sparen.

Optional umfasst die Bewertungsgröße einen Indikator für die Bewegung des Fahrzeugs, insbesondere Nutzfahrzeugs. Dabei kann der Indikator angeben, welche Art der Bewegung auf einen Datenkonflikt durch das Verfahren zu prüfen ist.

Optional betrifft der Indikator eine Bewegung des Fahrzeugs, insbesondere Nutzfahrzeugs, oder einen Stillstand des Fahrzeugs, insbesondere Nutzfahrzeugs. Dabei wurde erkannt, dass die Bewegung und/oder der Stillstand wesentliche zu differenzierende Merkmale sind, die typischerweise voneinander zuverlässig abgrenzbar sind. Die Bewertungsgröße kann so direkt Aufschluss über einen möglichen Datenkonflikt geben.

Optional erfolgt das Erfassen der Beschleunigungswerte über einen Mess-Zeitraum, und nach Ablauf des Mess-Zeitraums wird ein Ruhesignal zum Aktiveren eines Ruhe-Modus des Beschleunigungssensors ausgegeben. Damit kann erzielt werden, dass der Energieverbrauch des Kontrollgeräts nicht unnötig hoch ist. Nach Ablauf des Mess-Zeitraums kann entweder eine Manipulation beziehungsweise ein Datenkonflikt erkannt sein oder ausgeschlossen werden; in beiden Fällen kann die Bewegung des Fahrzeugs bewertet werden und es kann zum Energiesparen und zum Vermeiden einer Reproduktion derselben beziehungsweise ähnlicher Ergebnisse in den Ruhe-Modus gewechselt werden.

Optional erfolgt das Erfassen der Beschleunigungswerte wiederholt über mehrere Mess-Zeiträume; und die Häufigkeit des Erfüllens der Beschleunigungs-Schwellwertbedingung ist auf die mehreren Mess-Zeiträume bezogen. Damit können durch externe Kräfte versursachte und möglicherweise nur zeitlich lokalisierte Bewegungen von durch ein Fahren des Fahrzeugs verursachte Bewegungen bessert differenziert werden.

Optional wird die Häufigkeit pro Mess-Zeitraum höchstens einmal inkrementiert. Damit kann jeder der Mess-Zeiträume gesondert betrachtet werden und zum Bewerten der Bewegung herangezogen werden.

Optional betrifft die Beschleunigungs-Schwellwertbedingung ein Überschreiten eines Beschleunigungsschwellwerts durch die Beschleunigungswerte über eine vorbestimmte Dauer. Damit kann die Auswertung der Beschleunigungswerde weiter verbessert werden.

Gemäß einem Aspekt der Offenbarung wird ein Computerprogramm und/oder ein computerlesbares Medium bereitgestellt. Das Computerprogramm und/oder das computerlesbare Medium umfassen Befehle, die bei der Ausführung des Programms bzw. der Befehle durch eine Datenverarbeitungsvorrichtung diese veranlassen, das Verfahren gemäß der Offenbarung und/oder Schritte davon durchzuführen. Optional umfasst das Computerprogramm und/oder das computerlesbare Medium Befehle, die bei der Ausführung des Programms bzw. der Befehle durch eine Datenverarbeitungsvorrichtung diese veranlassen, die als vorteilhaft oder optional beschriebenen Verfahrensschritte durchzuführen, um einen damit verbundenen technischen Effekt zu erzielen.

Gemäß einem Aspekt der Offenbarung wird eine Datenverarbeitungsvorrichtung für ein als Tachograf ausgebildetes und einen Beschleunigungssensor umfassendes Kontrollgerät für ein Fahrzeug, insbesondere Nutzfahrzeug, bereitgestellt. Die Datenverarbeitungsvorrichtung ist dazu eingerichtet, das oben beschriebene Verfahren durchzuführen. Optional ist die Datenverarbeitungsvorrichtung dazu eingerichtet, einen als vorteilhaft oder optional beschriebenen Verfahrensschritt durchzuführen und/oder ein Verfahrensmerkmal zu realisieren, um einen damit verbundenen technischen Effekt zu erzielen.

Gemäß einem Aspekt der Offenbarung wird ein Kontrollgerät für ein Fahrzeug, insbesondere Nutzfahrzeug, bereitgestellt, wobei das Kontrollgerät als Tachograf ausgebildet ist und einen Beschleunigungssensor und die oben beschriebene Datenverarbeitungsvorrichtung umfasst. Optional ist das Kontrollgerät und/oder die Datenverarbeitungsvorrichtung dazu eingerichtet, einen als vorteilhaft oder optional beschriebenen Verfahrensschritt durchzuführen und/oder ein Verfahrensmerkmal zu realisieren, um einen damit verbundenen technischen Effekt zu erzielen.

Gemäß einem Aspekt der Offenbarung wird ein Fahrzeug, insbesondere Nutzfahrzeug, umfassend das oben beschriebene Kontrollgerät, bereitgestellt. Optional ist das Kontrollgerät und/oder das Kraftfahrzeug dazu eingerichtet, einen als vorteilhaft oder optional beschriebenen Verfahrensschritt durchzuführen und/oder ein Verfahrensmerkmal zu realisieren, um einen damit verbundenen technischen Effekt zu erzielen.

Nachfolgend wird je eine Ausführungsform mit Bezug zu den Figuren beschrieben.
Fig. 1 zeigt schematisch ein Fahrzeug, insbesondere Nutzfahrzeug, ein Kontrollgerät und eine Datenverarbeitungsvorrichtung 251 je gemäß einem Aspekt der Offenbarung;
Fig. 2 zeigt schematisch ein Ablaufdiagramm eines Verfahrens gemäß einem Aspekt der Offenbarung;
Fig. 3 zeigt schematisch ein Flussdiagramm eines Verfahrens gemäß einem Aspekt der Offenbarung; und
Fig. 4 zeigt eine schematische Darstellung eines Computerprogramms und/oder computerlesbaren Mediums gemäß einem Aspekt der Offenbarung.

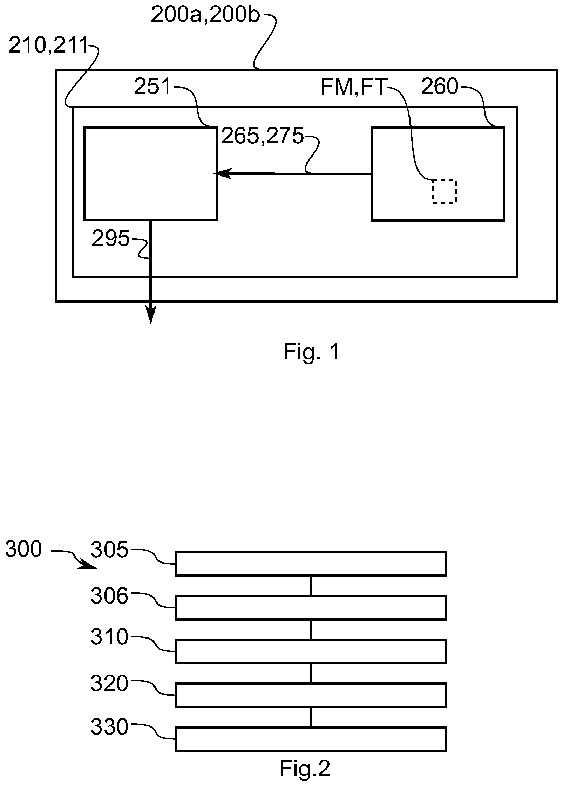

Figur 1 zeigt schematisch ein Fahrzeug 200a, insbesondere Nutzfahrzeug 200b, ein Kontrollgerät 210 und eine Datenverarbeitungsvorrichtung 251 je gemäß einem Aspekt der Offenbarung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug. Das Fahrzeug 200a, 200b ist beispielsweise ein Zugfahrzeug einer mehrgliedrigen Zugfahrzeug-Anhängefahrzeugkombination und/oder ein eingliedriges Fahrzeug.

Das Fahrzeug 200a, 200b ist dazu eingerichtet, durch einen Fahrer gefahren zu werden. Bei dem Fahren des Fahrzeugs 200a, 200b erfährt das Fahrzeug 200a, 200b eine Bewegung und somit Beschleunigungen. Zudem kann das Fahrzeug 200a, 200b beispielsweise durch externe Kräfte bewegt werden, ohne dass das Fahrzeug 200a, 200b dabei fährt, beispielsweise in einer Werkstatt und/oder durch einen Windstoß, beispielsweise durch Wetter und/oder andere Fahrzeuge bedingten Wind.

Das Fahrzeug 200a, 200b umfasst das Kontrollgerät 210. Das Kontrollgerät 210 ist als Tachograf 211 ausgebildet und umfasst einen Beschleunigungssensor 260 und die Datenverarbeitungsvorrichtung 251.

Die Datenverarbeitungsvorrichtung 251 ist dazu eingerichtet, das Kontrollgerät 210 zu kontrollieren. Die Datenverarbeitungsvorrichtung 251 ist zum Erfassen, Bestimmen, Verarbeiten und/oder Speichern von voneinander unterscheidbaren und mit Zeiten verknüpften Aktivitäten des Fahrers des Fahrzeugs 200a, 200b, und/oder des Fahrzeugs 200a, 200b eingerichtet. Die Aktivitäten umfassen eine Lenkzeit, "andere Arbeiten", eine Bereitschaftszeit, eine unbekannte Zeit und eine Arbeitsunterbrechung. Die Aktivitäten beziehen sich somit auf eine Tätigkeit des Fahrers und/oder ein Betreiben des Fahrzeugs 200a, 200b.

Der Beschleunigungssensor 260 ist ein interner Sensor des Kontrollgeräts 210. Der Beschleunigungssensor 260 ist dazu eingerichtet, Beschleunigungswerte 265, 275 zu Erfassen. Der Beschleunigungssensor 260 und die Datenverarbeitungsvorrichtung 251 sind kommunikationstechnisch miteinander zur Übermittlung von Daten, Befehlen und/oder Informationen verbunden. Der Beschleunigungssensor 260 kann beispielsweise die Beschleunigungswerte 265, 275 an die Datenverarbeitungsvorrichtung 251 übermitteln und die Datenverarbeitungsvorrichtung 251 kann an den Beschleunigungssensor 260 Befehle beziehungsweise Anforderungen zum Durchführen von Messungen und/oder zum Wechseln von Modi übermitteln.

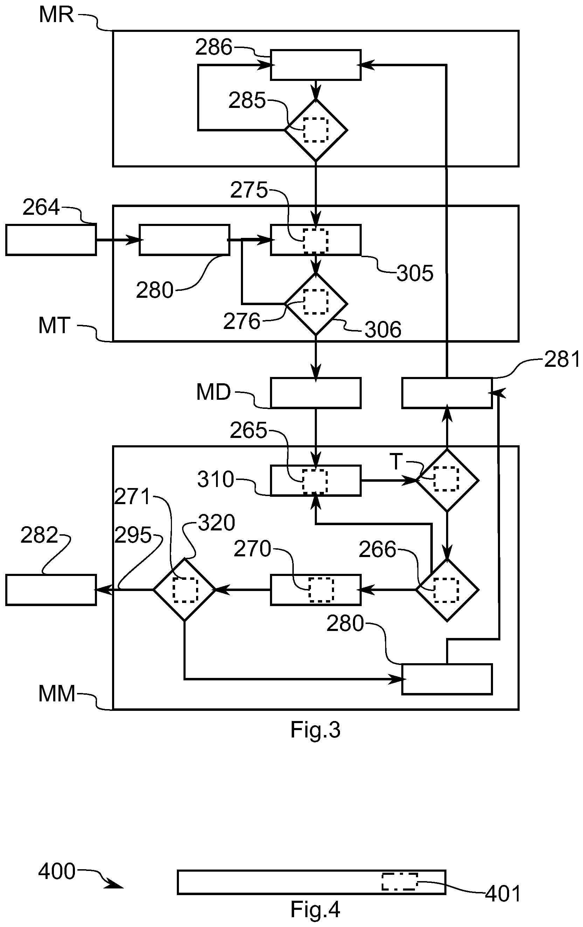

Der Beschleunigungssensor 260 ist dazu eingerichtet, die Beschleunigungswerte 265, 275 mit verschiedenen Frequenzen beziehungsweise Raten zu messen beziehungsweise zu erfassen. Der Beschleunigungssensor 260 ist dazu eingerichtet, die Beschleunigungswerte 265, 275 mit einer Mess-Frequenz FM oder mit einer Test-Frequenz FT zu messen. Dafür ist der Beschleunigungssensor 260 dazu eingerichtet, in mehreren Modi betrieben zu werden: einem Ruhe-Modus RM, einen Test-Modus TM und einen Mess-Modus MM (siehe jeweils Figur 3). Die verschiedenen Modi unterscheiden sich voneinander in dem Energieverbrauch, also dem Verbrauch an elektrische Energie zum Erfassen der Beschleunigungswerte 265, 275 und/oder der Auswertung der Beschleunigungswerte 265, 275 durch die Datenverarbeitungsvorrichtung 251. Dabei erfolgt in dem Ruhe-Modus RM keine Messung eines Beschleunigungswerts 265, 275 und/oder keine Übermittlung von Informationen an die Datenverarbeitungsvorrichtung 251. In dem Test-Modus TM erfolgt eine Messung von Test-Beschleunigungswerten 275 mit der Test-Frequenz FT. In dem Mess-Modus erfolgt eine Messung der Beschleunigungswerten 265 mit der Mess-Frequenz FM. Die Mess-Frequenz FM ist größer als die Test-Frequenz FT. Beispielsweise ist die Mess-Frequenz FM um einen Faktor 2 bis 50 größer als die Test-Frequenz FT. Beispielsweise ist die Mess-Frequenz FM gleich 100 Hz und die Test-Frequenz FT ist gleich 12,5 Hz.

Der Beschleunigungssensor 260 ist als ein linearer Beschleunigungssensor ausgebildet. Dabei ist der Beschleunigungssensor 260 dazu eingerichtet, Beschleunigungen in drei voneinander linear unabhängigen Richtungen zu erfassen. Der Beschleunigungssensor 260 ist also als ein Drei-Achsen-Linearbeschleunigungssensor ausgebildet. In einer anderen Ausführungsform kann der Beschleunigungssensor 260 andersartig ausgebildet sein, beispielsweise als ein Winkelbeschleunigungssensor, womit ein mögliches wiederholtes Kalibrieren entbehrlich sein könnte.

Die Datenverarbeitungsvorrichtung 251 ist dazu eingerichtet, eine Bewertungsgröße 295 auszugeben. Das Ausgeben der Bewertungsgröße 295 kann beispielsweise ein Schreiben in einen Speicher, ein visuell wahrnehmbares Anzeigen und/oder ein Übermitteln an ein mit dem Kontrollgerät 210 verbindbares Endgerät (nicht gezeigt) umfassen.

Die Datenverarbeitungsvorrichtung 251 ist dazu eingerichtet ist, das Verfahren 300 gemäß Figuren 2 und 3 durchzuführen. Das Verfahren 300 ist genauer mit Bezug zu den Figuren 2 und 3 beschrieben.

Figur 2 zeigt schematisch ein Ablaufdiagramm eines Verfahrens 300 gemäß einem Aspekt der Offenbarung. Das Verfahren 300 gemäß Figur 2 ist ein Verfahren 300 für ein Kontrollgerät 210 zum Bewerten von einer Bewegung eines Fahrzeugs 200a, 200b, wobei das Fahrzeug 200a, 200b das als Tachograf 211 ausgebildete Kontrollgerät 210 mit einem Beschleunigungssensor 260 zum Erfassen von Beschleunigungswerten 265, 275 aufweist. Ein derartiges Fahrzeug 200a, 200b und ein derartiges Kontrollgerät 210 ist mit Bezug zu Figur 1 beschrieben. Figur 2 wird unter Bezugnahme auf Figur 1 beschrieben.

Das Verfahren 300 weist auf: Erfassen 305 eines Test-Beschleunigungswerts 275 in einem Test-Modus MT, wobei in dem Test-Modus MT Test-Beschleunigungswerte 275 mit einer von einer Mess-Frequenz FM verschiedenen Test-Frequenz TF erfasst werden. In dem Test-Modus MT wird ein Kalibrationssignal 280 zum Kalibrieren des Beschleunigungssensor 260 ausgegeben.

Das Verfahren 300 weist auf: Bestimmen 306 einer Modusänderung MD zum Wechseln von dem Test-Modus MT in den Mess-Modus MM anhand einer den Test-Beschleunigungswert 275 betreffenden Test-Beschleunigungs-Schwellwertbedingung 276.

Das Verfahren 300 weist auf: Erfassen 310 von Beschleunigungswerten 265 in einem Mess-Modus MM, wobei die Beschleunigungswerte 265 in dem Mess-Modus MM mit der Mess-Frequenz FM erfasst werden. Die Mess-Frequenz FM ist größer als die Test-Frequenz FT. Das Erfassen 310 der Beschleunigungswerte 265 erfolgt über einen Mess-Zeitraum T, und nach Ablauf des Mess-Zeitraums T wird ein Ruhesignal 281 zum Aktiveren eines Ruhe-Modus MR des Beschleunigungssensors 260 ausgegeben. Das Erfassen 310 der Beschleunigungswerte 265 erfolgt wiederholt über mehrere Mess-Zeiträume T.

Das Verfahren 300 weist auf: Bestimmen 320 einer Bewertungsgröße 295, wobei die Bewertungsgröße 295 abhängig von einer die Beschleunigungswerte 265 betreffenden Beschleunigungs-Schwellwertbedingung 266 und einer eine Häufigkeit 270 eines Erfüllens der Beschleunigungs-Schwellwertbedingung 266 betreffenden Häufigkeits-Schwellwertbedingung 271 ist. Die Beschleunigungs-Schwellwertbedingung 266 betrifft ein Überschreiten eines Beschleunigungsschwellwerts durch die Beschleunigungswerte 265 über eine vorbestimmte Dauer. Die Häufigkeit 270 des Erfüllens der Beschleunigungs-Schwellwertbedingung 266 ist auf die mehreren Mess-Zeiträume T bezogen. Die Häufigkeit 270 wird pro Mess-Zeitraum T höchstens einmal inkrementiert.

In Abhängigkeit von der die Häufigkeit 270 betreffenden Häufigkeits-Schwellwertbedingung 271 wird ein Kalibrationssignal 280 zum Kalibrieren des Beschleunigungssensor 260 und/oder ein Ruhesignal 281 zum Aktiveren eines Ruhe-Modus MR des Beschleunigungssensors 260 ausgegeben.

Das Verfahren 300 weist auf: Ausgeben 330 der Bewertungsgröße 295. Die Bewertungsgröße 295 umfasst einen Indikator für die Bewegung des Fahrzeugs 200a, 200b. Der Indikator betrifft eine Bewegung des Fahrzeugs 200a, 200b oder einen Stillstand des Fahrzeugs 200a, 200b.

Dabei erkennt der Fachmann, dass das Verfahren 300 gemäß Figur 2 auch in einer anderen als der dargestellten Reihenfolge durchgeführt werden kann. Insbesondere ist es möglich, dass Schritte des Verfahrens 300 vertauscht, verschoben, wiederholt und/oder simultan durchgeführt werden können.

Figur 3 zeigt schematisch ein Flussdiagramm eines Verfahrens 300 gemäß einem Aspekt der Offenbarung. Das Verfahren 300 ist das mit Bezug zu Figur 2 beschriebene Verfahren. Figur 3 wird unter Bezugnahme auf Figuren 1 und 2 beschrieben.

Bei dem Verfahren 300 kann der Zustand des Beschleunigungssensors 260 beziehungsweise des Kontrollgeräts 210 zwischen den Ruhe-Modus MR (auch engl. "Rest-Mode"), den Test-Modus MT (auch engl. "Sleep State") und den Mess-Modus MM (auch engl. "Burst state") wie im Folgenden beschrieben wechseln und in jeden der Modi bis zu einer im Folgenden beschriebenen Bedingung verbleiben. Der Wechsel zwischen den Modi ermöglicht es, das Kontrollgerät 230 in dem Ruhe-Modus RM und/oder dem Test-Modus TM mit einem vergleichsweise geringen Energieverbrauch zu betreiben und durch Bedingungen ausgelöst in den Mess-Modus MM zu wechseln, der mehr Energie verbraucht und gleichzeitig die höchste Auflösung der Messung der Beschleunigungswerte 265 erzielt.

In dem Ruhe-Modus RM ist das Kontrollgerät 210 in einem Ruhezustand 286, also im Wesentlichen deaktiviert. Dies ermöglicht eine Ruhezeit beziehungsweise Übergangszeit ohne Messungen von Beschleunigungswerten 265, 275 nach dem das Kontrollgerät 210 in dem Test-Modus MT oder Mess-Modus MM betrieben wurde. Damit kann der Energieverbrauch des Kontrollgeräts 210 gesenkt werden.

Der Test-Modus TM kann als Ausgangspunkt angesehen werden. Der Test-Modus TM ist typischerweise am häufigsten aktiviert, wenn keine Manipulation des Kontrollgeräts 210 vorgenommen wird. Der Test-Modus TM weist einen vergleichsweise geringen Energieverbrauch, eine vergleichsweise niedrige Test-Frequenz FT und eine vergleichsweise geringe Auflösung auf. Der Zweck des Test-Modus TM besteht darin, potenziell unerlaubte Bewegungen des Fahrzeugs 200a, 200b zu identifizieren und demgemäß einen Wechsel in dem Mess-Modus MM zu bewirken. Der Mess-Modus MM ermöglicht genaue und zuverlässige Messungen von Beschleunigungswerten 265. In dem Mess-Modus MM ist der Energieverbrauch demgemäß vergleichsweise hoch.

Beispielhaft könnte das Betreiben des Kontrollgeräts 210 zum Bewerten einer Bewegung wie folgt erfolgen: Es wird ein Startsignal 264 ausgegeben, um das Kontrollgerät 210 zu aktivieren und in den Test-Modus MT zu verbringen. Die Datenverarbeitungsvorrichtung 251 gibt ein Kalibrationssignal 280 an den Beschleunigungssensor 260 zum Kalibrieren des Beschleunigungssensors 260 aus. Dadurch ist eine Orientierung des Kontrollgeräts 210 und/oder eine Gewichtskraft ausgefiltert und kann bei der Bewertung der Bewegung weiter unberücksichtigt bleiben. Das Kontrollgerät 210 verbleibt in dem Test-Modus MT und erfasst Test-Beschleunigungswert 275 mit der Test-Frequenz FT. Dabei kann die Datenverarbeitungsvorrichtung 251 in einem energiesparenden Modus betrieben werden.

Wenn eine Bewegung erkannt wird, also wenn der Test-Beschleunigungswert 275 eine Test-Beschleunigungs-Schwellwertbedingung 276 erfüllt, beispielsweise wenn der Test-Beschleunigungswert 275 größer als ein Test-Beschleunigungs-Schwellwert ist, erfolgt eine Modusänderung MD zum Wechseln von dem Test-Modus MT in den Mess-Modus MM. Anderenfalls, wenn die Test-Beschleunigungs-Schwellwertbedingung 276 nicht erfüllt ist, beispielsweise wenn der Test-Beschleunigungswert 275 kleiner als der Test-Beschleunigungs-Schwellwert ist, kann das Kontrollgerät 210 in dem Test-Modus MT verbleiben. Der Test-Beschleunigungs-Schwellwert kann dabei als ein Wert definiert werden, der von dem Test-Beschleunigungswert 275 überschritten werden muss, um die Modusänderung MD zum Wechseln von dem Test-Modus MT in den Mess-Modus MM auszulösen. Der Test-Beschleunigungs-Schwellwert kann beispielsweise in Form einer UINT8 implementiert sein und in der Einheit von 0,01 m/s^2 einen Wert von 40 aufweisen, also einer Beschleunigung von 0,4 m/s^2 entsprechen.

Das Kontrollgerät 210 kann dazu ausgebildet sein, dass in dem Mess-Modus MM eine Verarbeitung von Daten durch die Datenverarbeitungsvorrichtung 251 vorgesehen ist, während eine Verarbeitung von Daten durch die Datenverarbeitungsvorrichtung 251 in dem Ruhe-Modus RM und in dem Test-Modus TM entbehrlich ist. Zweck des Mess-Modus MM ist es, mit hoher Frequenz und/oder Auflösung und so mit hoher Zuverlässigkeit die Bewegung des Fahrzeugs 200a, 200b zu bewerten.

Ist die Modusänderung MD erfolgt, erfolgt ein Erfassen 310 von Beschleunigungswerten 265 in dem Mess-Modus MM, wobei die Beschleunigungswerte 265 in dem Mess-Modus MM mit der Mess-Frequenz FM erfasst werden. Die Mess-Frequenz FM ist größer als die Test-Frequenz FT. Das Erfassen 310 der Beschleunigungswerte 265 erfolgt über einen Mess-Zeitraum T, und nach Ablauf des Mess-Zeitraums T wird ein Ruhesignal 281 zum Aktiveren eines Ruhe-Modus MR des Beschleunigungssensors 260 ausgegeben.

In dem Mess-Modus MM soll eine Unterscheidung vorgenommen werden zwischen Transienten, umweltbedingten Beschleunigungen, die nicht auf eine Manipulation zurückgehen, und Bewegungen, die mit einer Manipulation des Kontrollgeräts 210 in Verbindung gebracht werden können und als solche bewertet werden können, wie letztlich durch die Bewertungsgröße 295 angezeigt werden soll. Dafür wird die Bewertungsgröße 295 in Abhängigkeit von einer die Beschleunigungswerte 265 betreffenden Beschleunigungs-Schwellwertbedingung 266 und einer eine Häufigkeit 270 eines Erfüllens der Beschleunigungs-Schwellwertbedingung 266 betreffenden Häufigkeits-Schwellwertbedingung 271 bestimmt. Die Beschleunigungs-Schwellwertbedingung 266 betrifft ein Überschreiten eines Beschleunigungsschwellwerts durch die Beschleunigungswerte 265 über eine vorbestimmte Dauer. Mit anderen Worten wird angenommen, dass beispielsweise bei einer Manipulation des Kontrollgeräts 210, beispielsweise einem Fahren des Fahrzeugs 200a, 200b ohne eine Aufzeichnung durch das Kontrollgerät 210, Bewegungen erfolgen, die beispielsweise Beschleunigungen, Verzögerungen und Kurvenfahrten umfassen können, wobei jede der Bewegung durch die Beschleunigungs-Schwellwertbedingung 266 in Verbindung mit der Häufigkeits-Schwellwertbedingung 271 als solche bewertet werden kann. Durch eine Anpassung der Beschleunigungs-Schwellwertbedingungen 266 und der Häufigkeits-Schwellwertbedingung 271 können falsch-positive Manipulationsversuchserkennungen unterdrückt werden.

Die Beschleunigungs-Schwellwertbedingung 266 definiert einen Beschleunigungsschwellwert. Ein Unterschreiten des Beschleunigungsschwellwerts durch einen Beschleunigungswert 265 hat keine weitere Bewertung zur Folge, die Beschleunigungs-Schwellwertbedingung 266 ist nicht erfüllt und der Beschleunigungssensor 260 wechselt nach Ablauf eines Mess-Zeitraums T in den Ruhe-Modus RM. Bei einem Überschreiten des Beschleunigungsschwellwert durch einen Beschleunigungswert 265 ist die Beschleunigungs-Schwellwertbedingung 266 erfüllt und es wird eine Häufigkeit 270 des Überschreitens der Beschleunigungs-Schwellwertbedingung 266 erfasst. Die Häufigkeit 270 bezieht sich dabei auf den Mess-Zeitraum T, in dem die Beschleunigungswert 265 erfasst werden. Die Häufigkeit 270 gibt somit an, wie oft innerhalb des Mess-Zeitraums T die Beschleunigungs-Schwellwertbedingung 266 erfüllt ist.

Beispielweise kann der Mess-Zeitraum T mit einer UINT8 implementiert werden und in Einheiten von 0,1 s einen Wert von 100 aufweisen, also 10 s entsprechen. Der Beschleunigungsschwellwert der Beschleunigungs-Schwellwertbedingung 266 kann mit einer UINT8 implementiert werden und in Einheiten von 0,01 m/s^2 einen Wert von 40 aufweisen, also 0,4 m/s^2 entsprechen. Die vorbestimmte Dauer eines Überschreitens des Beschleunigungsschwellwerts durch die Beschleunigungswerte 265 kann mit einer UINT8 implementiert werden und in Einheiten von 0,1 s einen Wert von 10 aufweisen, also 1 s entsprechen. Ist also der Beschleunigungsschwellwert für mehr als die vorbestimmte Dauer überschritten, ist die Beschleunigungs-Schwellwertbedingung 266 erfüllt. Dies wird über den Mess-Zeitraum T geprüft und die Häufigkeit 270 wird auf Null gesetzt, sofern die Häufigkeit 270 über einen vorbestimmten Gesamtzeitraum nicht inkrementiert wurde. Die Überprüfung, ob die Häufigkeit 270 in dem Gesamtzeitraum nicht erhöht wurde, wird im Test-Modus MT getroffen und ist in Figur 3 aus Gründen der Übersichtlichkeit nicht eingetragen.

Die Häufigkeit 270 wird mit einem durch die Häufigkeits-Schwellwertbedingung 271 definierten Häufigkeitsschwelle verglichen. Unterschreitet die Häufigkeit 270 die Häufigkeitsschwelle, ist die Häufigkeits-Schwellwertbedingung 271 nicht erfüllt und es erfolgt somit in Abhängigkeit von der die Häufigkeit 270 betreffenden Häufigkeits-Schwellwertbedingung 271 ein Ausgeben eines Kalibrationssignals 280 zum Kalibrieren des Beschleunigungssensor 260 und infolgedessen ein Ausgeben eines Ruhesignals 281 zum Aktiveren des Ruhe-Modus MR des Beschleunigungssensors 260.

Überschreitet die Häufigkeit 270 die Häufigkeitsschwelle, ist die Häufigkeits-Schwellwertbedingung 271 erfüllt und es erfolgt in Abhängigkeit von der die Häufigkeit 270 betreffenden Häufigkeits-Schwellwertbedingung 271 ein Ausgeben der Bewertungsgröße 295. Die Bewertungsgröße 295 kann eine Manipulation des Kontrollgeräts 210 oder einen Manipulationsversuch anzeigen. Daraufhin kann das Verfahren 300 beendet oder wiederholt werden, falls weitere mögliche Manipulation des Kontrollgeräts 210 oder einen Manipulationsversuch untersucht werden sollen. Die Bewertungsgröße 295 umfasst einen Indikator für die Bewegung des Fahrzeugs 200a, 200b. Der Indikator betrifft eine Bewegung des Fahrzeugs 200a, 200b oder einen Stillstand des Fahrzeugs 200a, 200b. Zudem erfolgt ein Ausgeben eines Stoppsignals 282. Die Bewertungsgröße 295 kann so einen Datenkonflikt indizieren. Die Häufigkeitsschwelle kann ebenfalls als eine UINT8 implementiert werden und in Einheiten von 1 beispielsweise einen Wert von 10 aufweisen. Die Häufigkeits-Schwellwertbedingung 271 prüft somit ein zehnfaches Erfüllen der Beschleunigungs-Schwellwertbedingung 266. Danach wird entweder das Stoppsignal 282 ausgegeben (positive Entscheidung bei der Häufigkeits-Schwellwertbedingung 271 beziehungsweise Überschreiten der Häufigkeits-Schwellwertbedingung 271) oder es wird in den Ruhemodus MR gewechselt (negative Entscheidung bei Häufigkeits-Schwellwertbedingung 271 beziehungsweise Unterschreiten der Häufigkeits-Schwellwertbedingung 271). Ein mehrfaches Erhöhen der Häufigkeit 270 ist während eines Mess-Zeitraum T nicht vorgesehen. Die Häufigkeit 270 behält ihren Wert auch außerhalb des Mess-Zeitraums T.

In dem Ruhe-Modus MR wird nur eine Zeit überwacht. Wenn ein Ruhezeitraum verstrichen ist, wird eine Ruhebedingung 285 als erfüllt angesehen und es erfolgt ein Wechsel in den Test-Modus MT. Anderenfalls, falls der Ruhezeitraum nicht verstrichen ist, wird eine Ruhebedingung 285 als nicht erfüllt angesehen und es wird im Ruhe-Modus MR verblieben. Der Ruhezeitraum kann als eine UINT16 implementiert werden und in Einheiten von 1,0 s angegeben werden und einen beispielhaften Wert von 60 aufweisen, der Ruhezeitraum kann also 60 s lang sein.

Das Verfahren 300 nutzt durch den Wechsel zwischen den Modi Techniken zum Einsparen von Energie, Messungen mit reduzierter Frequenz und/oder Auflösung and bietet zugleich eine hohe Genauigkeit. Das Verfahren 300 ermöglicht ein zuverlässiges Bestimmen, ob eine potenziell illegale beziehungsweise unerlaubte Aktivität und/oder Bewegung des Fahrzeugs 200a, 200b vorliegt, und kann zugleich flasch-positive Befunde über derartige Aktivität und/oder Bewegung vermindern.

Das Verfahren 300 kann jedenfalls nach dem Gesamtzeitraum von beispielsweise 3600 s neu beginnen.

Die Beispielwerte ergeben sich aus der Angabe der Datentypen (beispielsweise UINT8, UINT16) sowie der verwendeten Einheiten zur Angabe der Beispielwerte.

Beispielsweise kann eine Variable vom Datentyp UINT8 256 verschiedene Werte annehmen, eine Variable vom Datentyp UINT16 kann 65536 diskrete Werte darstellen. Die Grenzwerte für die verschiedenen Parameter ergeben sich aus den minimalen/maximalen Werten des Variablentyps multipliziert mit der entsprechenden Einheit.

Figur 4 zeigt eine schematische Darstellung eines Computerprogramms und/oder computerlesbaren Mediums 400 gemäß einem Aspekt der Offenbarung. Das Computerprogramm und/oder computerlesbare Medium 400 umfasst Befehle 401, die bei der Ausführung des Programms bzw. der Befehle 401 durch eine Datenverarbeitungsvorrichtung 251 diese veranlassen, das Verfahren 300 und/oder die Schritte des Verfahrens 300 gemäß Figuren 2 und 3 durchzuführen.

Die Befehle 401 können als ein Programmcode in einem beliebigen Code beziehungsweise in einer beliebigen Sprache vorliegen, insbesondere in einem Code, der für Steuerungen und/oder das Überwachen von Kontrollgeräten 210 geeignet ist. Das Computerprogramm und/oder computerlesbare Medium 200 kann ein beliebiges digitales Datenspeichergerät sein oder umfassen, wie zum Beispiel einen USB-Stick, eine Festplatte, eine CD-ROM, eine SD-Karte oder eine SSD-Karte. Das Computerprogramm muss nicht zwingend auf einem solchen computerlesbarem Speichermedium gespeichert sein, sondern kann auch über das Internet oder anderweitig abrufbar sein.

### Bezuaszeichen (Teil der Beschreibung)

- 200a: Fahrzeug
- 200b: Nutzfahrzeug
- 210: Kontrollgerät
- 211: Tachograf
- 251: Datenverarbeitungsvorrichtung
- 260: Beschleunigungssensor
- 264: Startsignal
- 265: Beschleunigungswert
- 266: Beschleunigungs-Schwellwertbedingung
- 270: Häufigkeit
- 271: Häufigkeits-Schwellwertbedingung
- 275: Test-Beschleunigungswert
- 276: Test-Beschleunigungs-Schwellwertbedingung
- 280: Kalibrationssignal
- 281: Ruhesignal
- 282: Stoppsignal
- 285: Ruhebedingung
- 286: Ruhezustand
- 295: Bewertungsgröße

- 300: Verfahren
- 305: Erfassen eines Test-Beschleunigungswerts
- 306: Bestimmen einer Modusänderung
- 310: Erfassen von Beschleunigungswerten
- 320: Bestimmen einer Bewertungsgröße
- 330: Ausgeben einer Bewertungsgröße

- FM: Mess-Freqeuenz
- FT: Test-Frequenz
- MD: Modusänderung
- MM: Mess-Modus
- MR: Ruhe-Modus
- MT: Test-Modus
- T: Mess-Zeitraum

## Patentansprüche

1. Verfahren (300) für ein Kontrollgerät (210) zum Bewerten von einer Bewegung eines Fahrzeugs (200a), insbesondere Nutzfahrzeugs (200b), wobei das Fahrzeug (200a), insbesondere Nutzfahrzeug (200b), das als Tachograf (211) ausgebildete Kontrollgerät (210) einen Beschleunigungssensor (260) zum Erfassen von Beschleunigungswerten (265, 275) aufweist, und das Verfahren (300) aufweist:
- Erfassen (310) von Beschleunigungswerten (265) in einem Mess-Modus (MM), wobei die Beschleunigungswerte (265) in dem Mess-Modus (MM) mit einer Mess-Frequenz (FM) erfasst werden;
- Bestimmen (320) einer Bewertungsgröße (295), wobei die Bewertungsgröße (295) abhängig von einer die Beschleunigungswerte (265) betreffenden Beschleunigungs-Schwellwertbedingung (266) und einer eine Häufigkeit (270) eines Erfüllens der Beschleunigungs-Schwellwertbedingung (266) betreffenden Häufigkeits-Schwellwertbedingung (271) ist; und
- Ausgeben (330) der Bewertungsgröße (295).

2. Verfahren (300) nach Anspruch 1, wobei das Verfahren (300) aufweist:
- Erfassen (305) eines Test-Beschleunigungswerts (275) in einem Test-Modus (MT), wobei in dem Test-Modus (MT) Test-Beschleunigungswerte (275) mit einer von der Mess-Frequenz (FM) verschiedenen Test-Frequenz (TF) erfasst werden;
- Bestimmen (306) einer Modusänderung (MD) zum Wechseln von dem Test-Modus (MT) in den Mess-Modus (MM) anhand einer den Test-Beschleunigungswert (275) betreffenden Test-Beschleunigungs-Schwellwertbedingung (276).

3. Verfahren (300) nach Anspruch 2, wobei die Mess-Frequenz (FM) größer als die Test-Frequenz (FT) ist.

4. Verfahren (300) nach Anspruch 2 oder 3, wobei in dem Test-Modus (MT) ein Kalibrationssignal (280) zum Kalibrieren des Beschleunigungssensor (260) ausgegeben wird.

5. Verfahren (300) nach einem der vorangegangenen Ansprüche, wobei in Abhängigkeit von der die Häufigkeit (270) betreffenden Häufigkeits-Schwellwertbedingung (271) ein Kalibrationssignal (280) zum Kalibrieren des Beschleunigungssensor (260) und/oder ein Ruhesignal (281) zum Aktiveren eines Ruhe-Modus (MR) des Beschleunigungssensors (260) ausgegeben wird.

6. Verfahren (300) nach einem der vorangegangenen Ansprüche, wobei die Bewertungsgröße (295) einen Indikator für die Bewegung des Fahrzeugs (200a), insbesondere Nutzfahrzeugs (200b), umfasst.

7. Verfahren (300) nach Anspruch 6, wobei der Indikator eine Bewegung des Fahrzeugs (200a), insbesondere Nutzfahrzeugs (200b), oder einen Stillstand des Fahrzeugs (200a), insbesondere Nutzfahrzeugs (200b), betrifft.

8. Verfahren (300) nach einem der vorangegangenen Ansprüche, wobei das Erfassen (310) der Beschleunigungswerte (265) über einen Mess-Zeitraum (T) erfolgt, und nach Ablauf des Mess-Zeitraums (T) ein Ruhesignal (281) zum Aktiveren eines Ruhe-Modus (MR) des Beschleunigungssensors (260) ausgegeben wird.

9. Verfahren (300) nach einem der vorangegangenen Ansprüche, wobei das Erfassen (310) der Beschleunigungswerte (265) wiederholt über mehrere Mess-Zeiträume (T) erfolgt; und die Häufigkeit (270) des Erfüllens der Beschleunigungs-Schwellwertbedingung (266) auf die mehreren Mess-Zeiträume (T) bezogen ist.

10. Verfahren (300) nach einem der vorangegangenen Ansprüche, wobei die Häufigkeit (270) pro Mess-Zeitraum (T) höchstens einmal inkrementiert wird.

11. Verfahren (300) nach einem der vorangegangenen Ansprüche, wobei die Beschleunigungs-Schwellwertbedingung (266) ein Überschreiten eines Beschleunigungsschwellwerts durch die Beschleunigungswerte (265) über eine vorbestimmte Dauer betrifft.

12. Computerprogramm und/oder computerlesbares Medium (400), umfassend Befehle (401), die bei der Ausführung des Programms bzw. der Befehle (401) durch eine Datenverarbeitungsvorrichtung (251) diese veranlassen, das Verfahren (300) und/oder die Schritte des Verfahrens (300) nach einem der Ansprüche 1 bis 11 durchzuführen.

13. Datenverarbeitungsvorrichtung (251) für ein als Tachograf (211) ausgebildetes und einen Beschleunigungssensor (260) umfassendes Kontrollgerät (210) für ein Fahrzeug (200a), insbesondere Nutzfahrzeug (200b), wobei die Datenverarbeitungsvorrichtung (251) dazu eingerichtet ist, das Verfahren (300) nach einem der Ansprüche 1 bis 11 durchzuführen.

14. Kontrollgerät (210) für ein Fahrzeug (200a), insbesondere Nutzfahrzeug (200b), wobei das Kontrollgerät (210) als Tachograf (211) ausgebildet ist und einen Beschleunigungssensor (260) und die Datenverarbeitungsvorrichtung (251) nach Anspruch 13 umfasst.

15. Fahrzeug (200a), insbesondere Nutzfahrzeug (200b), umfassend ein Kontrollgerät (210) nach Anspruch 13.
